Europäisches Patentamt

European Patent Office

Office européen des brevets

(19)

(11) Veröffentlichungsnummer: **0 519 288 A1**

## (12) EUROPÄISCHE PATENTANMELDUNG

(21) Anmeldenummer: **92109611.1**

(22) Anmeldetag: **06.06.92**

(51) Int. Cl.5: **G09F 7/18**, B60R 13/10

(30) Priorität: **15.06.91 DE 4119789**

(43) Veröffentlichungstag der Anmeldung:
**23.12.92 Patentblatt 92/52**

(84) Benannte Vertragsstaaten:
**AT BE CH ES FR GB GR IT LI NL PT**

(71) Anmelder: **Peuker, Tino**
**Hauptstrasse 106**
**O-9632 Neukirchen(DE)**
Anmelder: **Peuker, Gustav**
**Hauptstrasse 106**
**O-9632 Neukirchen(DE)**

(72) Erfinder: **Peuker, Tino**
**Hauptstrasse 106**
**O-9632 Neukirchen(DE)**
Erfinder: **Peuker, Gustav**
**Hauptstrasse 106**
**O-9632 Neukirchen(DE)**

(74) Vertreter: **Pürckhauer, Rolf, Dipl.-Ing.**
**Friedrich-Ebert-Strasse 27 Postfach 10 09 28**
**W-5900 Siegen 1(DE)**

(54) **Vorrichtung zum Arretieren von Tafelelementen in Kennzeichenverstärkern.**

(57) 2.1. Die Aufgabe der Erfindung besteht darin,daß bei Gebrauch der Vorrichtung eine einfache Montage trotz gegebenenfalls geringer Bewegungsfreiheit, eine geräuscharme Halterung des Tafelelementes und Widerstandsfähigkeit bei extremen Erschütterungen am Fahrzeug gewährt wird.

2.2. Gelöst wird diese Aufgabe, indem erfindungsgemäße Federelemente in einer im umlaufenden u-förmigen Rahmen angeordneten Führungsanordnung diametral verriegelt werden. Die Federelemente weisen dabei durch einen federnden Verbindungssteg verbundene Auflageflächen auf,welche während des gesamten Verriegelungsvorganges mit den in der Führungsanordnung angeordneten Gleitrampen in Kontakt stehen. Der Lasteintrag erfolgt durch den Kontakt des Tafelelementes mit dem am Federelement angeordneten Auflagenoppen.

2.3. Anwendung findet diese Lösung vorzugsweise beim Arretieren von KfZ- Kennzeichentafeln in einem Kennzeichenverstärker, bei welchem die Bewegungsfreiheit um diesen herum stark eingeschränkt ist.

Fig. 7

Die Erfindung betrifft eine Vorrichtung zum Arretieren von Tafelelementen in Kennzeichenverstärkern gemäß dem Oberbegriff des Patentanspruchs 1.

Eine Vorrichtung dieser Art ist aus dem DE-GM 9015713 bekannt. Hierbei ist vorgesehen, den Kennzeichenverstärker mit einem umlaufenden u-förmigen Rand auszustatten, in dem mindestens einseitige Einsteckkanäle ausgebildet sind, die von außen zugänglich gestaltet sind. Diese bekannte Lösung sieht außerdem vor, in die von außen zugänglichen Einsteckkanäle mit zur Tafelelementebene paralleler Einführrichtung Federelemente einzusetzen, die bedarfsweise mit Rastelementen ausgestattet sein können. Die Rastelemente haben Verriegelungsfuktion. Vorzugsweise sind die Rastelemente so ausgebildet, daß sie lösbar eingesetzt werden können, so daß im Bedarfsfall die Verriegelung wieder aufgehoben werden kann. Nachteile dieser bekannten Lösung sind der fehlende Ausgleich von durchaus üblichen Maßtoleranzen der einzelnen Kennzeichenschilder, die unzureichende Verriegelung bei größeren Erschütterungen, wodurch die Rastelemente ausrasten und auch verloren gehen und die erforderliche Bewegungsfreiheit am Fahrzeug zum Einbringen der Rastelemente, welche jedoch nicht bei jedem Fahrzeug gegeben ist. Diese Mängel schränken die Anwendbarkeit dieser Vorrichtung deutlich ein.

Der Erfindung liegt deshalb die Aufgabe zugrunde, eine Vorrichtung zum Arretieren von Tafelelementen in Kennzeichenverstärkern zu schaffen, welche die aufgezeigten Mängel des bekannten Standes der Technik beseitigt und dennoch eine schnelle und einfache Montage des Tafelelementes ermöglicht.

Erfindungsgemäß wird die Aufgabe dadurch gelöst, daß innerhalb des u-förmigen Randes des Kennzeichenverstärkers wenigstens eine, vorzugsweise jedoch zwei Führungsanordnungen vorgesehen sind, in welche jeweils ein erfindungsgemäßes Federelement eingelegt werden kann (Einlegeposition), welches dann entsprechend den Führungselementen der Führungsanordnung in die Arbeitsstellung verschoben werden kann. Die Führungsanordnungen sind vorzugsweise unter dem unteren längsseitigen sowie breiter gestalteten u-förmigen Rand auf der Grundplatte angeordnet. Die Anordnung der Führungsanordnungen sollte vorzugsweise im Bereich des linken und rechten äußeren Drittels des Kennzeichenverstärkers erfolgen. Dabei zeichnet sich jede Führungsanordnung gleichermaßen durch zwei nebeneinander liegende und auf der Grundplatte angeordnete, in Form und Größe gleichartige Gleitrampen aus.Im Bereich dieser Gleitrampenanordnung weist die untere Kante des u-förmigen Randes einen Führungsschlitz auf. Die Federelemente sind gekennzeichnet durch jeweils zwei Auflageflächen, einen diese Auflageflächen verbindenden elastischen Verbindungssteg, einen den Auflageflächen gegenüber liegenden Auflagenoppen sowie durch einen Betätigungsriegel, welcher in der Einlegeposition aus dem Führungsschlitz der Führungsanordnung herausragt. Die erfindungsgemäßen Federelemente sind vor dem Einlegen des Tafelelementes in den Kennzeichenverstärker durch den offenen Bereich des u-förmigen Randes innerhalb der Führungsanordnung in Einlegeposition zu bringen. Danach erfolgt das Einbringen des Tafelelementes in den Kennzeichenverstärker, wobei es zuerst in den unteren längsseitigen u-förmigen sowie breiter gestalteten Randbereich des Kennzeichenverstärkers mit seiner unteren Längskante hineingeschoben wird. Gleichzeitig wird es leicht nach vorn gegewölbt, um die Maßdifferenz zwischen Tafelelementbreite und lichter Weite zwischen den seitlichen Randbereichen des u-förmigen Randes des Kennzeichenverstärkers zu überwinden und mit den Tafelelementseitenkanten hinter die seitlichen u-förmigen Randbereiche des Kennzeichverstärkers zu gelangen. Das Hineinschieben des Tafelelementes in den oberen längsseitigen Randbereich erfolgt erst durch Verschieben der Federelemente entlang der Gleitrampen innerhalb der Führungsanordnung mittels Kraftangriff am Betätigungsriegel des Federelementes. Die Gleitrampenhöhe entspricht dabei dem Maß, um welches das Tafelelement nach oben verschoben werden muß, um unter den oberen längsseitigen u-förmigen Rand des Kennzeichenverstärkers zu gelangen.

Eine vorteihafte Maßnahme zum allseitigen Arretieren des Tafelelementes innerhalb des Kennzeichenverstärkers wird erreicht, indem bei der Anordnung von zwei Führungsanordnungen im unteren längsseitigen u-förmigen sowie breiter gestalteten Randbereich die Gleitrampen so gestaltet sind, daß das Verschieben der Federelemente in entgegengesetzter Richtung erfolgt.

Eine weitere zweckmäßige Maßnahme ist die Anordnung von vertikalen Stegen auf der Grundplatte des Kennzeichenverstärkers, welche einen Anstieg in Richtung des oberen längsseitigen Randschenkels des u-förmigen Randes aufweisen. Dadurch wird beim Verschieben des Tafelelementes unter den oberen längsseitigen Rand des Kennzeichenverstärkers ein Abheben des Tafelelementes aus der Grundplattenebene heraus und zugleich ein festes Einspannen des Tafelelementes unter dem oberen schmalen längsseitigen Randschenkel erreicht.

Die vorteilhafte Ausgestaltung der Erfindung soll nachstehend an einem Ausführungsbeispiel näher erläutert werden.

Dabei zeigen:

Fig.1: die Draufsicht auf den Kennzeichenverstärker mit einem Ausschnitt zum Einblick in die Führungsanordnung,

Fig.2: die Seitenansicht des Kennzeichenverstärkers im Schnitt A-A,

Fig.3: die Draufsicht auf das Federelement,

Fig.4: die perspektivische Ansicht des Federelementes,

Fig.5: perspektivische Ansicht der Führungsanordnung ( Ausschnitt X aus Fig.1 ),

Fig.6: perspektivische Ansicht der Einlegeposition des Federelementes

Fig.7: perspektivische Ansicht der Arbeitsstellung des Federelementes

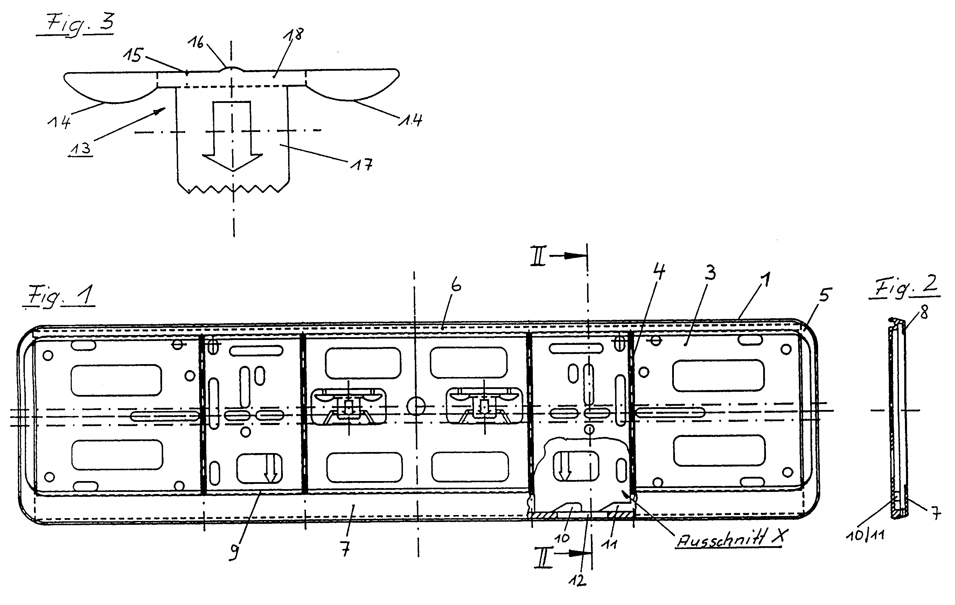

Wie aus Fig. 1 ersichtlich ist, besteht der Kennzeichenverstärker 1 aus einer Grundplatte 3 mit einem diese Grundplatte umlaufenden u-förmigen Rand 5. Dieser umlaufende u-förmige Rand dient in erster Linie dem Überlappen der Kennzeichenaußenkanten im eigelegten und arretierten Zustand. Aus diesem Grund ist die lichte Weite zumindest zwischen den beiden längsseitigen Randschenkeln 6,7 kleiner als die Breite des zu arretierenden Tafelelementes 2.

Entsprechend Fig.1 schließt der das Tafelelement 2 umfassende Profilschenkel 8 des U-Profils an den beiden Längsseiten mit einem tieferliegenden schmalen Rand 9 ab. Damit wird erreicht, daß das Tafelelement 2 beim Arretieren längsseitig bis über seinen bereits vorgeprägten und den Vorschriften entsprechenden schwarzen Rand umfaßt und dieser schwarze Rand durch diesen tieferliegenden schmalen Rand 9 ersetzt wird.

Beim umlaufenden u-förmigen Rand 5 ist der längsseitige Randschenkel 7 bedeutend breiter als sein gegenüberliegender Randschenkel 6 gestaltet, um einerseits in seinem u-förmigen Innenraum Platz für die Anordnung der Führungsanordnung zu bieten ( siehe Ausschnitt X in Fig. 1 ) und andererseits als Werbeleiste zu dienen.

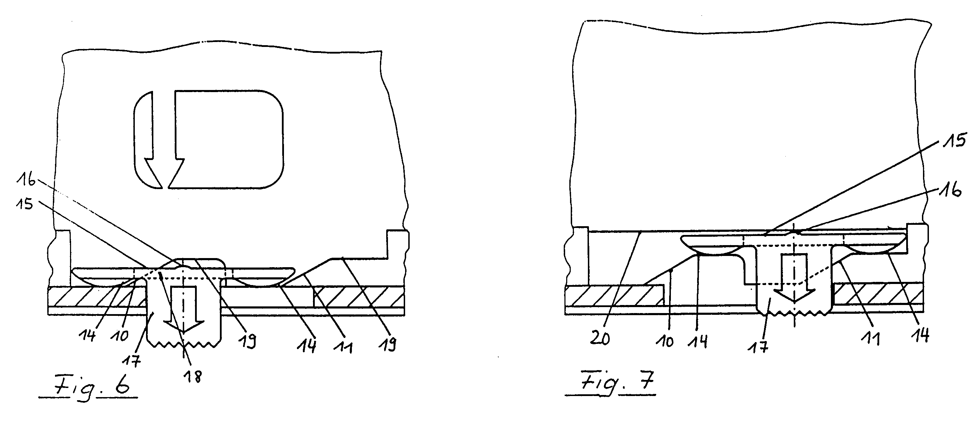

Im u- förmigen Innenraum des breiteren Randschenkels 7 sind vorzugsweise in den beiden äußeren Dritteln jeweils eine Führungsanordnung untergebracht. Diese Führungsanordnungen zeichnen sich, wie aus der Fig.5 ersichtlich ist, durch jeweils zwei nebeneinander angeordnete, in Form und Größe gleichartige Gleitrampen 10 und 11 sowie den im unteren Bereich des u-förmigen Randes 5 jeweils angeordneten Führungsschlitz 12 aus.

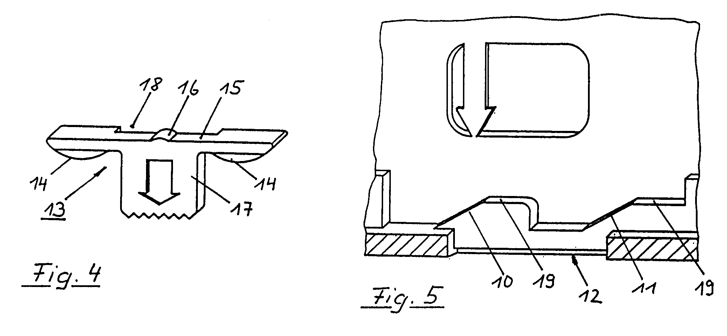

Das zum Arretieren des Tafelelementes 2 im Kennzeichenverstärker 1 ebenfalls notwendige Federelement 13 ist in seiner Gestaltung den Fig. 3 und 4 zu entnehmen. In seinen groben Zügen entspricht das Federelement 13 einer T-Form. Es ist gekennzeichnet durch zwei Auflageflächen 14, einen diese Auflageflächen 14 verbindenden elastischen Verbindungssteg 15, einen den Auflageflächen gegenüberliegenden Auflagenoppen 16 und einen zum Verbindungssteg 15 senkrecht angeordneten Betätigungsriegel 17. Wie vor allem aus Fig.4 ersichtlich ist, sind die Auflageflächen 14 so gestaltet, daß sie nach unten kreisbogenförmige Verdickungen aufweisen. Damit wird erreicht, daß keine störenden Kanten vorhanden sind, die das Einlegen oder Verschieben des Federelementes 13 erschweren könnten.

Der diese Auflageflächen 14 verbindende elastische Verbindungssteg 15 ist schmaler gestaltet als die Auflageflächen 14, wodurch die einseitige Ausnehmung 18 am Federelement 13 entsteht. Der Verbindungssteg 15 weist oberhalb, genau mittig angeordnet, einen Auflagenoppen 16 auf. Auf diesen Auflagenoppen 16 erfolgt der Lasteintrag auf das Federelement 13 durch den dortigen Kontakt mit dem eingelegten und zu arretierenden Tafelelement 2. Der senkrecht zu diesem Verbindungssteg 15 angeordnete Betätigungsriegel 17 entspricht im Maß seiner Dicke der des Verbindungssteges 15. Dieses Maß ist jedoch kleiner als die Dicke der Auflageflächen 14 und zwar mindestens um den Betrag der Gleitrampendicke. Der Betätigungsriegel 17 ragt in eingelegter Position des Federelementes 13 aus dem Führungsschlitz 12 heraus. Er dient als von außen zugänglicher Kraftangriffspunkt beim Verschieben des Federelementes 13 in seine Arbeitsstellung. Um die Griffigkeit zu verbessern, weist er an seinem unteren Ende mehrere, quer zur Verschieberichtung des Federelementes 13 angeordnete Rillen auf. Diese Rillen dienen auch als Angriffspunkt für ein Werkzeug.

Aus Figur 1 ist weiterhin zu erkennen, daß die Grundplatte 3 nicht nur nach einem bestimmten Schema angeordnete Perforationen aufweist, um das Befestigen des Kennzeichenverstärkers an verschiedenen Fahrzeutypen zu ermöglichen, sie weist auch mehrere vertikale Stege 4 auf. Diese vertikalen Stege 4 liegen parallel zueinander und weisen einen zum oberen schmalen Rand 6 verlaufenden Anstieg auf. Sie dienen der Gewinnung eines nach oben zunehmenden Abstandes des zu arretierenden Tafelelementes 2 von der Grundplattenebene. Dieser Abstand des Tafelelementes von der Grundplatte bietet somit Raum für aus der Grundplatte gegebenenfalls herausragende Teile der Befestigungselemente, beispielsweise von Schraubenköpfen.

Beim Arretieren des Tafelelementes 2 bieten diese einen Anstieg aufweisenden Stege 4 einen weiteren Vorteil. Sie unterstützen den Ausgleich von Maßtoleranzen der Tafelelemente , indem sie das Tafelelement 2 beim Hineinschieben in den oberen schmalen Rand 6 aus der Grundplattenebene einseitig herausführen und damit ein Andruck des Tafelelementes 2 gegen diesen Randbereich erfolgt.

Die beschriebene Arretiervorrichtung ist so zu handhaben, daß vor dem Einlegen des Tafelelementes in den am Fahrzeug bereits befestigten Kennzeichenverstärker 1 die an der Grundplatte 3 abknickbar besfestigten Federelemente 13 in Einlegeposition gebracht werden. Entsprechend Fig. 6 wird das Federelement von oben in den offenen Bereich des breiten u-förmigen Randschenkel 7 mit dem Betätigungsriegel 17 nach unten und der Ausnehmung 18 zur Grundplatte 3 in die Führungsanordnung und dort zwischen die Gleitrampen 10, 11 eingelegt. Dabei rutscht der Betätigungsriegel 17 durch den Führungsschlitz 16 und ragt aus dem Kennzeichenverstärker 1 heraus. Die Gleitrampe 10 liegt dabei genau hinter der Ausnehmung 18, und die Auflageflächen 14 liegen vor den Gleitrampen 10 und 11 .

Um den Bereich des Einlegens der Federelemente zu kennzeichnen, weisen zwei Durchbrüche der Grundplatte 3, welche sich oberhalb der Führungsanordnung befinden, einen Pfeil auf, der auf die Einlegestelle hinweist.

Danach erfolgt das Einlegen des Tafelelementes 2 in den Kennzeichenverstärker 1, indem es zuerst in den unteren längsseitigen u-förmigen sowie breiter gestalteten Randschenkel 7 mit seiner unteren Längskante 20 hineingeschoben wird. Gleichzeitig wird es leicht nach vorn oder hinten gewölbt, um die Maßdifferenz zwischen Tafelelementbreite und lichter Weite zwischen den seitlichen Randbereichen des u-förmigen Randes 5 zu überwinden und mit den Tafelelementseitenkanten hinter die seitlichen Randbereiche des u- förmigen Randes zu gelangen. Das so eingelegte Tafelelement 2 liegt mit seiner unteren Längskante auf den Arbeitsflächen 19 der Gleitrampen 10 und 11 auf und hat noch keinen Kontakt zu den Federelementen 13 ( Fig. 6 ).

Das Hineinschieben des Tafelelementes 2 in den oberen u-förmigen Randschenkel 6 erfolgt erst durch seitliches Verschieben der Federelemente 13. Durch Kraftangriff mittels Werkzeug an dem Betätigungsriegel 17 wird das Federelement 13 von der Einlegeposition ( Fig. 6 ) in die Arbeitsstellung ( Fig. 7 ) durch Verschieben desselben gebracht. Das Verschieben der Federelemente 13 erfolgt jeweils in entgegengesetzter Richtung quer zur Verschieberichtung des Tafelelementes 2 im Kennzeichenverstärker. Diese Querverriegelung des Tafelelementes hat den Vorteil, daß sie auch quer zur häufigsten Kraftangriffsrichtung bei Erschütterungen durch Betreiben des Fahrzeuges oder beim Schließen des Kofferraumes wirkt. Dabei erfolgt die Bewegungsführung des Federelementes 13 durch die auf der Grundplatte 3 angeordneten Gleitrampen 10 und 11, über die die Auflageflächen 14 bis hin zur sich anschließenden Arbeitsfläche 19 gleichzeitig gleiten. Auf Grund des auf dem Verbindungssteg 15 angeordneten Auflagenoppen 16 und der damit erreichten punktförmigen Krafteinwirkung erreicht das Federelement 13 bereits nach Verlassen der Einlegeposition mit der Kontaktaufnahme zum Tafelelement 2 einen vorgespannten Zustand. Diese Spannung wird bis zum Erreichen der Arbeitsstellung durch Verschieben des Tafelelementes 2 verstärkt und bleibt erst nach Erreichen der Arbeitsstellung konstant.

Die Arretierung erfolgt dabei einmal durch das Hinneinschieben des Tafelelementes 2 in den u-förmigen Bereich des oberen schmalen Randschenkels 6 und gleichermaßen durch den Andruck des auf den ansteigenden vertikalen Stegen 4 anliegenden Tafelelementes 2 gegen den U- Profilschenkel 8 dieses Randschenkels 6.

Eine feste und geräuscharme Arretierung sind die Folge dieser Maßnahmen.

Eine Entriegelung des Federelementes 13 kann nur durch Überwindung der im Federelement 13 erreichten Spannkraft in entgegengesetzter Richtung mittels Werkzeug erfolgen.

Eine weitere vorteilhafte Ausgestaltung der Erfindung wird erreicht, wenn das Federelement 13 ohne Betätigungsriegel 17 gestaltet wird und so nur durch direkten Werkzeugangriff über den Führungsschlitz 12 in die Arbeitsstellung bewegt werden kann. Diese Variante bietet den Vorteil, daß der von außen zugängliche Führungsschlitz 12 so schmal gestaltet werden kann, daß die Arretierung des Tafelelementes sowie deren Entriegelung ausnahmslos mittels Werkzeughilfe erfolgen kann. Der Arretierungsvorgang erfolgt analog der oben beschriebenen Vorgehensweise.

**Patentansprüche**

1. Vorrichtung zum Arretieren von Tafelelementen (2) in Kennzeichenverstärkern (1), welche aus einer Grundplatte (3) mit darauf angeordneten vertikalen Stegen (4) und einem diese Grundplatte (3) umlaufenden u-förmigen Rand (5) bestehen, welcher einen breiteren längsseitigen Randschenkel (7) aufweist in dessen u-förmigen Innenraum das Tafelelement (2) vor dem Arretieren mit eine seiner Längsseiten von oben bei gleichzeitigen Hintergreifen der seitlichen Randbereiche des u-förnigen umlaufenden Randes (5) hineingelegt wird, wobei das Arretieren des Tafelelementes (2) durch Verschieben desselben unter den oberen schmalen längsseitigen Randschenkel (6) mittels Federelementen (13) erfolgt, dadurch gekennzeichnet, daß im Bereich des breiteren längsseitigen Randschenkels (7) auf der Grundplatte (3) in den beiden äußeren Dritteln des längsseitigen Randschenkels (7) Führungsanordnungen vorgesehen sind, die sich durch die Anordnung von jeweils zwei nebeneinander liegenden Gleitrampen (10, 11) und unter diesen im unteren Bereich des umlaufenden Randes (5) angeordneten Führungsschlitze (12) auszeichnen, daß in diese Führungsanordnungen vor dem Einlegen des Tafelelementes (2) die Federelemente (13) eingelegt werden, welche sich durch jeweils zwei Auflageflächen ( 14), einen diese Auflageflächen (14) verbindenden elastischen Verbindungssteg (15), einen den Auflageflächen gegenüber liegenden Auflagenoppen (16) sowie durch einen senkrecht zum Verbindungssteg ( 15) angeordneten Betätigungsriegel ( 17) auszeichnen und daß der Kraftangriff zum Verschieben der Federelemente (13) von außen an den durch den Führungsschlitz (12) ragenden Betätigungsriegel ( 17) quer zur Verschieberichtung des Tafelelementes (2) erfolgt.

2.  Vorrichtung nach Anspruch 1, dadurch gekennzeichnet, daß die auf der Grundplatte (3) parallel zueinander angeordneten vertikalen Stege (4) einen Anstieg in Richtung des oberen schmalen Randschenkels (6) aufweisen.

3.  Vorrichtung nach Anspruch 1 und 2, dadurch gekennzeichnet, daß die Auflageflächen ( 14) der Federelemente (13) nach unten kreisbogenförmige Verdickungen aufweisen.

4.  Vorrichtung nach Anspruch 1 bis 3 , dadurch gekennzeichnet, daß die Gleitrampenanordnung der beiden Führungsanordnungen so erfolgt, daß das Verschieben der Federelemente (13) nur in entgegengesetzter Richtung möglich ist.

5.  Vorrichtung nach Anspruch 1 bis 4, dadurch gekennzeichnet, daß der Betätigungsriegel (17) in Einlegeposition des Federelementes (13) aus dem Führungsschlitz (12) um das Höhenmaß der Gleitrampen (10, 11) herausragt.

6.  Vorrichtung nach Anspruch 1 bis 5 , dadurch gekennzeichnet, daß sich das Federelement (13) durch jeweils zwei Auflageflächen (14), einen diese Auflageflächen (14) verbindenden elastischen Verbindungssteg (15) und einen den Auflageflächen (14) gegenüberliegenden Auflagenoppen (16) auszeichnet und der Führungsschlitz (12) der Führungsanordnung bei dieser Federelementgestaltung äußerst schmal gestaltet ist.

Fig. 3

15  16  18

14  14

13

17

Fig. 1

II

6  4  3  1  5

Fig. 2

8

9  7  10  11

II

12

Ausschnitt X

10/11  7

EP 0 519 288 A1

6

Fig. 5

Fig. 4

Fig. 6

Fig. 7

EP 0 519 288 A1

| | Europäisches Patentamt | EUROPÄISCHER RECHERCHENBERICHT | Nummer der Anmeldung |
|---|---|---|---|

EP    92 10 9611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 912 546 (H.WEIGEL)<br>* das ganze Dokument * <br><br>--- | 1,5 | G09F7/18<br>B60R13/10 |
| D,A | DE-U-9 015 713 (T.WALZ)<br>* Seite 5, Zeile 16 - Seite 14, Zeile 20; Abbildungen 1,2,5 * <br><br>--- | 1,2 | |
| A | DE-A-3 644 470 (B.UNGER)<br>* das ganze Dokument * <br><br>--- | 1,2 | |
| A | AT-B-390 766 (R.SCHLOMS)<br>* Seite 2, Zeile 60 - Seite 4, Zeile 32; Abbildung 1 * <br><br>----- | 1 | |
| | | | **RECHERCHIERTE SACHGEBIETE (Int. Cl.5)**<br><br>G09F<br>B60R |

Der vorliegende Recherchenbericht wurde für alle Patentansprüche erstellt

| Recherchenort | Abschlußdatum der Recherche | Prüfer |
|---|---|---|
| BERLIN | 24 AUGUST 1992 | P.TAYLOR |